(19) Europäisches Patentamt
European Patent Office
Office européen des brevets

(11) **EP 3 423 250 B1**

(12) **EUROPEAN PATENT SPECIFICATION**

(45) Date of publication and mention
of the grant of the patent:
**06.05.2020 Bulletin 2020/19**

(51) Int Cl.:
***B29B 17/02*** *(2006.01)*

(21) Application number: **17709391.1**

(86) International application number:
**PCT/EP2017/054517**

(22) Date of filing: **27.02.2017**

(87) International publication number:
**WO 2017/148866 (08.09.2017 Gazette 2017/36)**

(54) **PROCESS FOR CLEANING RECYCLABLE PLASTIC MATERIAL**

VERFAHREN ZUR REINIGUNG VON RECYCELBAREM KUNSTSTOFFMATERIAL

PROCÉDÉ DE NETTOYAGE DE MATIÈRE PLASTIQUE RECYCLABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.02.2016 EP 16157866**

(43) Date of publication of application:
**09.01.2019 Bulletin 2019/02**

(73) Proprietor: **Tusti B.V.
5612 AR Eindhoven (NL)**

(72) Inventor: **KOLIJN, Jan
5627 KK Eindhoven (NL)**

(74) Representative: **van Wijk, Alexander Pieter
Mainstay IP
Kallenkoterallee 82 A
8331 AJ Steenwijk (NL)**

(56) References cited:
**WO-A1-2011/019397        CN-A- 101 103 050
GB-A- 1 432 718           JP-B2- 3 156 935
JP-B2- 3 156 935          US-A- 5 780 520
US-A- 5 863 385           US-A1- 2003 041 994
US-A1- 2016 053 205**

## Description

### FIELD OF THE INVENTION

The present invention relates to a process for cleaning recyclable plastic material, and the use of an emulsion to remove contaminants from a contaminated recyclable plastic material.

### BACKGROUND OF THE INVENTION

The recycling of plastic containers is becoming increasingly important from both environmental and economical perspective. The plastic containers to be recycled usually contain contaminants in the form of residues of the material they once contained. Such materials include for instance detergents, motor oils, milk, frying oils and cooking oils. In order to remove residues of these materials from the plastic containers, the plastic containers are usually grinded and the plastic particles so obtained are subjected to a cleaning process. Cleaning processes commonly used for this purpose are energy intensive processes because of the high temperatures that need to be applied and/or are environmentally unfriendly since use is made of combustible or flammable solvents and/or corrosive cleaning agents.

WO 2011/019397 A1 discloses a method for cleaning a recyclable substrate, using an emulsion which comprises a blend of dibasic esters. JP 3156935 B2 discloses a method for removing a polypropylene-based resin in the form of a coating film from the bumper of a car: the bumper is crushed and the coating is recovered by flotation in a solution comprising a surfactant. US 2016/053205 A1 discloses the use of dibasic esters to remove coatings such as inks, labels, adhesives and metallic films from a polymeric substrate.

Object of the present invention is to provide a cleaning process for recyclable plastic materials which is less energy intensive and which at the same time is environmentally friendly.

### SUMMARY OF THE INVENTION

It has now been found that this can be established when use is made of a particular emulsion in the cleaning process.

Accordingly, the present invention relates to a process for cleaning recyclable plastic material according to claim 1.

A major advantage of the present invention resides in the fact that the present process can be carried out at a low temperature and low pressure, whereas at the same time the use of a combustible or flammable solvent can be avoided, and at least part of the water phase can be reused, allowing for an environmentally safe and economically attractive cleaning process. In addition, in accordance with the present invention also the solvent phase applied can be recycled, contributing further to the environmental attractiveness of the present process.

### DETAILED DESCRIPTION OF THE INVENTION

In step (a), a contaminated recyclable plastic material is provided. A wide variety of recyclable non-styrene based plastic materials can be cleaned in accordance with the present invention. The recyclable non-styrene based plastic material can suitably be selected from the group consisting of a recyclable high density polyethylene material, low density polyethylene material, polyethylene terephthalate material, polypropylene material, polyvinylchloride material, polyamide material, polybutylene terephthalate material, polycarbonate material, polymethylmethacrylate material, and polyoxymethylene material. Copolymers of any of these recyclable non-styrene based polymer materials can also suitably be used in accordance with the present invention. In addition, the recyclable plastic material to be used in the present invention can also suitably be a laminated polymer composite in which two or more these polymer materials have been laminated onto each other.

Preferably, the recycle non-styrene based plastic material is a recyclable high density polyethylene material or polyethylene terephthalate material.

Suitably, the contaminated recyclable non-styrene based plastic material is derived from consumer product containers. The plastic containers may be containers for consumer products such as food or beverage products, oil products, lubricant products, cosmetic products, or their residues. Suitable examples of food products include sauces, yogurt and mayonnaise. Suitable examples of beverages include lemonades, alcoholic drinks and milk. Suitable examples of oil products are frying oils and cooking oils. Suitable examples for lubricant oils are dielectric oils and motor oils. Suitable examples of cosmetic products include body lotions, sun screen compositions and shampoos. Preferably, the contaminants are in liquid form.

The contaminated recyclable non-styrene plastic material will usually be provided in the form of plastic particles that are obtained by shredding or grinding contaminated plastic containers into plastic container parts. The particles may for instance be in the form of flakes. If the particles are in the shape of flakes, the average surface area of the flakes can suitably in the range of from 8-1600 cm$^2$, preferably in the range of from 50-900 cm$^2$.

The contaminated recyclable plastic material to be provided in step (a) can be subjected to a pre-cleaning step. In such a pre-cleaning step undesired materials such as glass, metal and sand can be removed from the contaminated recyclable plastic material before it is provided in step (a).

In step (b), the contaminated recyclable plastic material is contacted at a temperature in the range of from 5-35 °C with a liquid mixture which comprises a water phase and a separate solvent phase to remove contaminants from the contaminated recyclable plastic material, whereby the solvent phase comprises a fatty acid ester and is present in the form of droplets which are at least partly distributed in the water phase.

The temperature in step (b) is preferably in the range of from 15-30 °C, more preferably in the range of from 15-25 °C.

Suitably, step (b) is carried out at atmospheric pressure.

The water phase is present in an amount of more than 50 wt. %, based on total weight of the liquid mixture. Preferably, the water phase is present in an amount in the range of from 60-90 wt%, more preferably in an amount in the range of from 75-90 wt%, and most preferably in an amount in the range of from 80-90 wt%, based on total weigh to the liquid mixture.

The solvent phase in step (b) is preferably present in an amount in the range of from 1-30 wt. %, based on total weight of the liquid mixture. More preferably, the solvent phase in step (b) is present in an amount in the range of from 1-20 wt. %, based on total weight of the liquid mixture. Even more preferably, the solvent phase in step (b) is present in an amount in the range of from 5-20 wt. %, and most preferably the solvent phase is present in an amount in the range of from 10-20 wt%, based on total weight of the liquid mixture.

The weight ratio of the water phase and the solvent phase (W/S) to be used in step (b) is suitably in the range of from 2-90 preferably in the range of from 4-90, and more preferably in the range of from 4-18.

Suitably, the liquid mixture to be used in step (b) has a pH in the range of from 6-8, preferably in the range of from 6.5-7.5, and more preferably a pH of 7.0.

In step (b), the solvent phase is present in the form of droplets that are at least partly distributed in the water phase. The main part of the solvent phase will be present in the form of droplets distributed in the water phase. However, also part of the solvent phase may be in the form of droplets that are distributed along the surface of the water phase.

The droplets of the solvent phase can suitably be formed in the water phase by physical mixing the water phase and separate solvent phase prior to or during step (b). The water phase and the separate solvent phase can for instance suitably be mixed to form the liquid mixture in a separate vessel by agitation or stirring before it is applied in step (b). In another embodiment, the water phase and the solvent phase may be mixed during step (b) using nozzles that spray respectively the water phase and the solvent phase into sprays of droplets that are allowed to mix to form the liquid mixture. Preferably, in step (b) a liquid mixture is used that is formed prior to its use in step (b). It will be understood that the kinetic viscosity of the solvent phase is higher than the kinematic viscosity of the water phase.

The liquid mixture behaves like an unstable emulsion that allows in the absence of the use of physical mixing phase-separation into a two liquid layers, i.e. a water phase layer and a solvent phase layer. Before phase-separation the liquid mixture will flow like one liquid. Preferably, the liquid mixture does not contain an emulsifying agent or is substantially free of an emulsifying agent. Preferably, the liquid mixture is allowed to phase-separate rapidly and completely into a water phase and a solvent phase. Preferably, the liquid mixture is an unstable emulsion. The advantage of the liquid mixture to be used according to the present invention is that the phase-separation of the water phase and solvent phase allows easy recovery and further application of these phases such as re-use of these phases in the present process.

The water phase suitably comprises distilled water. The water phase to be used in step (b) may contain one or more salts or finely grounded particles to establish a so-called heavy medium. Suitable examples of such salts include sodium chloride (NaCl), magnesium chloride (MgCl$_2$) and calcium chloride (CaCl$_2$). Suitable examples of such finely grounded particles include clay and ferrosilicon. Preferably, the water phase to be used in step (b) consists of water, more preferably distilled water.

The solvent phase in step (b) comprises a fatty acid ester. The fatty acid ester is a fatty acid ester having the general formula (I) of R$^1$-(C=O)--R$^2$, wherein R$^1$ is an alkyl group comprising between 8-24 carbon atoms, and R$^2$ is an alkyl alcohol group comprising between 1-4 carbon atoms.

Preferably, R$^1$ is an alkyl group which comprises between 12-20 carbon atoms. R$^1$ may be a straight or branched alkyl group. Further, R$^1$ may be a saturated or (mono- or multiple) unsaturated alkyl group.

Preferably, R$^2$ is an alkyl alcohol group comprising 1-4 carbon atoms, more preferably 1 or 2 carbon atoms.

The fatty acid esters to be used in accordance with the present invention are suitably prepared by reacting a fatty acid with an alcohol. Suitably, the fatty acid ester is derived from a saturated fatty acid or unsaturated fatty acid. Suitable examples of saturated fatty acids from which the fatty acid ester may be derived include those selected from the group consisting of nonanoic acid, isononanoic acid, decanoic acid, isodecanoic acid, undecanoic acid, iso-undecanoic acid, dodecanoic acid, iso-dodecanoic acid, tridecanoic acid, iso-tridecanoic acid, tetradecanoic acid, iso-tetradecanoic acid, pentadecanoic acid, iso-pentadecanoic acid, hexadecanoic acid, iso-hexadecanoic acid, heptadecanoic acid, iso-heptadecanoic acid, octadecanoic acid, iso-octadecanoic acid, nonadecanoic acid, iso-nonadecanoic acid, eicosanoic acid, iso-eicosanoic acid, heneicosanoic acid, iso-heneicosanoic acid, docosanoic acid, iso-docosanoic acid, tricosanoic acid, iso-tricosanoic acid, tetracosanoic acid, iso-tetracosanoic acid, pentacosanoic acid and isopentacosanoic acid. Suitable examples of unsaturated fatty acids from which the fatty acid ester may be derived include those elected from the group consisting of mono-unsaturated fatty acids such as crotonic acid, myristoleic acid, palmitoleic acid, sapienic acid, oleic acid, elaidic acid, vaccenic acid, gadoleic, eicosenoic acid, erucic acid, nervonic acid; di-unsaturated fatty acids such as linoleic acid, eicosadienoic acid, and docosadienoic acid;tri-unsaturated fatty acids such as linolenic acid, pinolenic acid, eleostearic acid, mead acid, dihomo-γ-linolenic acid, and eicosatrienoic acid; tetra-unsaturated fatty acids such as stearidonic acid, arachidonic acid, eicosatetraenoic acid, and adrenic acid;pentaunsaturated fatty acids such as bosseopentaenoic acid, eicosapentaenoic acid, ozubondo acid, sardine acid, and tetracosanolpentaenoic acid; and hexa-unsaturated fatty acids such as docosahexaenoic acid and herring acid

Preferably, the fatty acid ester is derived from a saturated fatty acid selected from the group consisting of tridecanoic acid, iso-tridecanoic acid, tetradecanoic acid, iso-tetradecanoic acid, pentadecanoic acid, iso-pentadecanoic acid, hexadecanoic acid, iso-hexadecanoic acid, heptadecanoic acid, ios-heptadecanoic acid, octadecanoic acid, iso-octadecanoic acid, nonadecanoic acid, iso-nonadecanoic acid, eicosanoic acid, iso-eicosanoic acid, heneicosanoic acid, and iso-heneicosanoic acid.

More preferably, the fatty acid ester is derived from a saturated fatty acid selected from the group consisting of as hexadecanoic acid, iso-hexadecanoic acid, heptadecanoic acid, iso-heptadecanoic acid, octadecanoic acid, and iso-octadecanoic acid.

When the fatty acid ester is derived from an unsaturated fatty acid, the unsaturated fatty acid is preferably selected from the group consisting of mono-unsaturated fatty acids such as myristoleic, palmitoleic acid, sapienic acid, oleic acid, elaidic acid, vaccenic acid, gadoleic, eicosenoic acid; di-unsaturated fatty acids such as linoleic acid, eicosadienoic acid; tri-unsaturated fatty acids such as linolenic acid, pinolenic acid, eleostearic acid, mead acid, dihomo-γ-linolenic acid, eicosatrienoic acid; tetra-unsaturated fatty acids such as stearidonic acid, arachidonic acid, eicosatetraenoic acid; and pentaunsaturated fatty acids such as bosseopentaenoic acid and eicosapentaenoic acid.

More preferably, the unsaturated fatty acid selected from the group consisting of mono-unsaturated fatty acids such as palmitoleic acid, sapienic acid, oleic acid, elaidic acid, vaccenic acid,;di-unsaturated fatty acids such as linoleic acid; tri-unsaturated fatty acids such as linolenic acid, pinolenic acid, eleostearic acid; tetra-unsaturated fatty acids such as stearidonic acid, arachidonic acid; and pentaunsaturated fatty acids such as bosseopentaenoic acid.

Most preferably, the fatty acid ester is derived from linoleic acid.

The fatty acid is preferably reacted with methanol or ethanol, more preferably with methanol.

Preferred fatty acid esters to be used in accordance with the present invention can suitably be saturated fatty esters or unsaturated fatty acid esters.

Suitable examples of saturated fatty acid esters are those selected from the group consisting of nonanoic acid methyl ester, isononanoic acid methyl ester, decanoic acid methyl ester, isodecanoic acid methyl ester, undecanoic acid methyl ester, iso-undecanoic acid methyl ester, dodecanoic acid methyl ester, iso-dodecanoic acid methyl ester, tridecanoic acid methyl ester, iso-tridecanoic acid methyl ester, tetradecanoic acid methyl ester, iso-tetradecanoic acid methyl ester, pentadecanoic acid methyl ester, iso-pentadecanoic acid methyl ester, hexadecanoic acid methyl ester, iso-hexadecanoic acid methyl ester, heptadecanoic acid methyl ester, iso-heptadecanoic acid methyl ester, octadecanoic acid methyl ester, iso-octadecanoic acid methyl ester, nonadecanoic acid methyl ester, iso-nonadecanoic acid methyl ester, eicosanoic acid methyl ester, iso-eicosanoic acid methyl ester, heneicosanoic acid methyl ester, iso-heneicosanoic acid methyl ester, docosanoic acid methyl ester, iso-docosanoic acid methyl ester, tricosanoic acid methyl ester, iso-tricosanoic acid methyl ester, tetracosanoic acid methyl ester, iso-tetracosanoic acid methyl ester, pentacosanoic acid methyl ester and isopentacosanoic acid methyl ester.

Suitable examples of unsaturated fatty acid esters include those selected from the group consisting of crotonic acid methyl ester, myristoleic acid methyl ester, palmitoleic acid methyl ester, sapienic acid methyl ester, oleic acid methyl ester, elaidic acid methyl ester, vaccenic acid methyl ester, gadoleic, eicosenoic acid methyl ester, erucic acid methyl ester, nervonic acid methyl ester; di-unsaturated fatty acid methyl esters such as linoleic acid methyl ester, eicosadienoic acid methyl ester,and docosadienoic acid methyl ester; tri-unsaturated fatty acid methyl esters such as linolenic acid methyl ester, pinolenic acid methyl ester, eleostearic acid methyl ester, mead acid methyl ester, dihomo-γ-linolenic acid methyl ester, and eicosatrienoic acid methyl ester; tetra-unsaturated fatty acid methyl esters such as stearidonic acid methyl ester, arachidonic acid methyl ester, eicosatetraenoic acid methyl ester, and adrenic acid methyl ester; pentaunsaturated fatty acid methyl esters such as bosseopentaenoic acid methyl ester, eicosapentaenoic acid methyl ester, ozubondo acid methyl ester, sardine acid methyl ester, tetracosanolpentaenoic acid methyl ester; and hexa-unsaturated fatty acid methyl esters, such as docosahexaenoic acid methyl ester and herring acid methyl ester.

Preferably, the fatty acid ester is selected from the group consisting of tridecanoic acid methyl ester, iso-tridecanoic acid methyl ester, tetradecanoic acid methyl ester, iso-tetradecanoic acid methyl ester, pentadecanoic acid methyl ester, iso-pentadecanoic acid methyl ester, hexadecanoic acid methyl ester, iso-hexadecanoic acid methyl ester, heptadecanoic acid methyl ester, ios-heptadecanoic acid methyl ester, octadecanoic acid methyl ester, iso-octadecanoic acid methyl ester, nonadecanoic acid methyl ester, iso-nonadecanoic acid methyl ester, eicosanoic acid methyl ester, iso-eicosanoic acid methyl ester, heneicosanoic acid methyl ester, and iso-heneicosanoic acid methyl ester. Preferably, the unsaturated fatty acid ester is selected from the group consisting of myristoleic, palmitoleic acid methyl ester, sapienic acid methyl ester, oleic acid methyl ester, elaidic acid methyl ester, vaccenic acid methyl ester, gadoleic,and eicosenoic acid methyl ester; di-unsaturated fatty acid methyl esters such as linoleic acid methyl ester, and eicosadienoic acid methyl ester; tri-unsaturated fatty acid methyl esters such as linolenic acid methyl ester, pinolenic acid methyl ester, eleostearic acid methyl ester, mead acid methyl ester, dihomo-γ-linolenic acid methyl ester, and eicosatrienoic acid methyl ester; tetra-unsaturated fatty acid methyl esters such as stearidonic acid methyl ester, arachidonic acid methyl ester, and eicosatetraenoic acid methyl ester; and pentaunsaturated fatty acid methyl esters such as bosseopentaenoic acid methyl ester and eicosapentaenoic acid methyl ester.

More preferably, the saturated fatty acid ester is selected from the group consisting of hexadecanoic acid methyl ester, iso-hexadecanoic acid methyl ester, heptadecanoic acid methyl ester, iso-heptadecanoic acid methyl ester, octadecanoic acid methyl ester, and iso-octadecanoic acid methyl ester. More preferably, the unsaturated fatty acid ester is selected from the group consisting of palmitoleic acid methyl ester, sapienic acid methyl ester, oleic acid methyl ester, elaidic acid methyl ester, and vaccenic acid methyl ester; di-unsaturated fatty acid methyl esters such as linoleic acid methyl ester; tri-unsaturated fatty acid methyl esters such as linolenic acid methyl ester, pinolenic acid methyl ester, and eleostearic acid methyl ester; tetra-unsaturated fatty acid methyl esters such as stearidonic acid methyl ester, and arachidonic acid methyl ester and pentaunsaturated fatty acid methyl esters such as bosseopentaenoic acid methyl ester.

Most preferably, the fatty acid ester is linoleic acid methyl ester. Particularly preferred fatty acid esters to be used in accordance with the present invention include methyl linoleate, methyl nonanoate and ethyl dodecanoate. Especially attractive results are obtained when use is made of methyl nonanoate.

In a particular attractive embodiment, as fatty acid esters use is made of biodiesels.

Accordingly, the present invention preferably relates to a process for cleaning recyclable plastic material comprising the following steps:

(a) providing a contaminated recyclable non-styrene based plastic material;
(b) contacting the contaminated recyclable plastic material at a temperature in the range of from 5-35 °C with a liquid mixture which comprises a water phase and a separate solvent phase to remove contaminants from the contaminated recyclable plastic material, whereby the solvent phase comprises a biodiesel and is present in the form of droplets which are at least partly distributed in the water phase, and wherein the water phase is present in an amount of more than 50 wt. %, based on total weight of the liquid mixture;
(c) separating at least part of recyclable plastic material as obtained in step (b) from the liquid mixture as obtained in step (b) which contains contaminants removed from the contaminated recyclable plastic material;
(d) allowing at least part of the liquid mixture as obtained in step (c) to phase-separate into a water phase and a solvent phase which contains contaminants removed from the contaminated recyclable plastic material; and
(e) recycling at least part of the water phase as obtained in step (d) to step (b).

Biodiesels are commonly referred to as a vegetable or animal-fat based diesel fuels comprising long chain alkyl (e.g. methyl, ethyl, or propyl) esters. Biodiesel is typically made by chemically reacting lipids (e.g. vegetable oil, soybean oil or animal fat) with an alcohol to produce fatty acid esters. Hence, in accordance with the present invention the solvent in the solvent phase preferably comprises a biodiesel.

Suitable fats and oils of which the biodiesel can be made are vegetable oils or waste products derived from vegetable or animal fat. Suitable vegetable oils that may be used in the production of biodiesel include: rapeseed oil, soybean oil, palm oil, mustard oil, castor oil, coconut oil (copra oil), corn oil, cottonseed oil, false flax oil, hemp oil, peanut oil, radish oil, ramtil oil, rice bran oil, safflower oil, sunflower oil, tung oil, algae oil, copaiba oil, honge oil, jatropha oil, jojoba oil, milk bush oil, petroleum nut oil, walnut oil, sunflower oil, dammar oil, linseed oil, poppyseed oil, stillingia oil, vernonia oil, amur cork tree fruit oil, apple seed oil, balanos oil, bladderpod oil, bruceajavanica oil, burdock oil (bur oil), candlenut oil (kukui nut oil), carrot seed oil, chaulmoogra oil, crambe oil, cuphea oil, lemon oil, orange oil, mango oil, mowrah butter, neem oil, rosehip seed oil, sea buckthorn oil, shea butter, snowball seed oil (viburnum oil), tall oil, tamanu oil, and tonka bean oil (cumaru oil). Suitable waste products include used mixed cooking and/or frying oils and waste from animal destruction installations.

Preferred biodiesel to be used as solvent in the solvent phase in accordance with the present invention include biodiesels derived from soy oils, rapeseed oils and used cooking oils.

The biodiesel has preferably an average molecular weight in the range of from 220-350 g/mol, more preferably in the range of from 250-300 g/mol.

The biodiesel has preferably a kinematic viscosity in the range of from 2-8, more preferably in the range of from 2-6 mm$^2$/s (at 40° C).

The solvent phase which comprises a biodiesel and contains the contaminants can suitably recovered after step (d), and be further processed. The biodiesel can for instance be used in processes for preparing soaps, biodiesel, surface active compounds or the preparation of gas. A major advantage of the use of biodiesel is that the contaminants do not need to be separated from the biodiesel but that the mixture of biodiesel and contaminants can directly be used in such further processes.

Steps (a) and (b) are suitably be carried out in the same system, for instance a closed vessel or tank. The contact in step (b) is suitably established by mixing the recyclable non-styrene based plastic material and the liquid mixture. Suitably, the vessel or tank will therefore be provided with a mixing system to agitate the contents of the vessel or tank and to establish sufficient contact between the recyclable plastic material and the liquid mixture in step (b). By mixing the liquid mixture and the recyclable plastic material which is suitably be in the form of shredded or grinded particles, in step (b) a slurry which comprises plastic particles and the liquid mixture will be obtained.

Step (b) will suitably be carried out for a predetermined length of time. Preferably, step (b) is carried out over a relatively short period of time. Suitably, step (b) is carried out for a period of time in the range of from 15 seconds to 20 minutes, preferably for a period of time in the range of 1-15 minutes, more preferably for a period of time in the range of from between 2-15 minutes, and most preferably for a period of time in the range of from 2-10 minutes.

Step (b) can suitably be carried out at a variety of pressures. Step (b) is preferably carried out at atmospheric pressure.

If desired, step (b) can be carried out in a series of vessel or tanks which are interconnected with each other. In this way, step (b) can be carried out in a number of stages, ensuring that contaminants are sufficiently removed from the recyclable plastic material. It is also possible to carry out step (b) in a batch mode of operation in which separate tanks or vessels are operated one after each other.

In step (c), the recyclable plastic material as obtained in step (b) is at least separated from the liquid mixture as obtained in step (b) which contains contaminants removed from the contaminated recyclable plastic material. Preferably, substantially all of the recyclable plastic material is removed instep (c) from the liquid mixture. In the context of the present application this means that more than 95% of the recyclable plastic, and preferably more than 99% of the recyclable plastic material is separated from the liquid mixture in step (c). To establish the separation, the slurry which comprises particles of recycled plastic material and the liquid mixture as obtained in step (b) can suitably be passed to a separation system in which the cleaned plastic material in the form of particles will be separated from the liquid mixture that contains contaminants. A variety of separation systems can be used in step (c). Suitably, the separation system is a cyclone. Other suitable separation systems include sink-float tanks.

The separation in step (c) can suitably be carried out at a temperature in the range of from 10-35 °C, preferably at a temperature in the range of from 15-25 °C. Step (c),

can suitably be carried out at a variety of pressures. Preferably, step (c) is carried out at atmospheric pressure.

In step (d), at least part of the liquid mixture as obtained in step (c) is allowed to phase-separate into a water phase and a solvent phase which contains contaminants removed from the contaminated recyclable plastic material. Preferably, the entire liquid mixture as obtained in step (c) is allowed to phase-separate into a water phase and a solvent phase that contains contaminants removed from the contaminated recyclable plastic material. Although, the water phase may contain some contaminants removed from the contaminated recyclable plastic material, the contaminants will mainly be present in the solvent phase. The phase-separation in step (d) can be established by passing the liquid mixture as obtained in step (c) to a separate vessel in which in the absence of physical mixing the liquid will phase-separate into two liquid layers, i.e. a water phase layer and a solvent phase layer which contains contaminants removed from the contaminated recyclable plastic material. Once, phase-separation has been established in step (d), a water phase can be recovered and a solvent phase which contains contaminants removed from the contaminated recyclable plastic material can be recovered.

In step (e), at least part of the water phase as obtained in step (d) is recycled to step (b). Preferably, at least 50 wt % of the water phase obtained in step (d) is recycled to step (b). More preferably at least 75 wt% and more preferably more than 90 wt% of the water phase as obtained in step (d) is recycled to step (b). Suitably, the entire water phase as obtained in step (d) can be recycled to step (b). It may be suitable to subject at least part of the water phase as obtained in step (d) to a treatment is which contaminants that are present in the water phase are removed from the water phase before the cleaned water phase so obtained is recycled to step (b). The recycling of at least part of the water phase in step (e) is attractive from both economic and environmental reasons.

The recyclable plastic material as obtained in step (c) can subsequently be recovered. The recovered recyclable plastic material can subsequently be subjected to a rinsing step to further remove solvent phase that may still be present on the surface of the recyclable plastic material. For such a rinsing step at least part of the water phase as obtained in step (d) can be used or alternatively water from another source can be used for the rinsing. The recyclable material, either subject or not subjected to a rinsing step, may then be dried and the dried recyclable plastic material so obtained can be recovered, and subsequently be used to form new plastic containers for consumer products. The water used for the rinsing can subsequently be combined with the liquid mixture to be subjected to step (d).

In an attractive embodiment of the present invention, at least part of the solvent phase as obtained in step (d) is recycled to step (b). Preferably, at least 50 wt% of the solvent phase as obtained in step (d) is recycled to step (b). More preferably, at least 75 wt% of the solvent phase as obtained in step (d) is recycled to step (b). The recycling of at least part of the solvent phase as obtained in step (d) to step (b) is attractive from both economic and environmental reasons.

Hence, the present invention also relates to a process for cleaning recyclable plastic material comprising the following steps:

(a) providing a contaminated recyclable non-styrene based plastic material;
(b) contacting the contaminated recyclable plastic material at a temperature in the range of from 5-35 °C with a liquid mixture which comprises a water phase and a separate solvent phase to remove contaminants from the contaminated recyclable plastic material, whereby the solvent phase comprises a fatty acid ester and is present in the form of droplets which are at least partly distributed in the water phase, and wherein the water phase is present in an amount of more than 50 wt. %, based on total weight of the liquid mixture;
(c) separating at least part of recyclable plastic material as obtained in step (b) from the liquid mixture as obtained in step (b) which contains contaminants removed from the contaminated recyclable plastic material;
(d) allowing at least part of the liquid mixture as obtained in step (c) to phase-separate into a water phase and a solvent phase which contains contaminants removed from the contaminated recyclable plastic material;
(e) recycling at least part of the water phase as obtained in step (d) to step (b); and
(f) recycling at least part of the solvent phase as obtained in step (d) to step (b).

In a particular embodiment, the present invention relates to a process to a process for cleaning recyclable plastic material comprising the following steps:

(a) providing a contaminated recyclable non-styrene based plastic material which is derived from consumer product containers;
(b) contacting the contaminated recyclable plastic material at a temperature in the range of from 5-35 °C with a liquid mixture which comprises a water phase and a solvent phase to remove contaminants from the contaminated recyclable plastic material, wherein the contaminants comprise food or beverage products, oil products, lubricant products, cosmetic products, or their residues, and wherein the water phase is present in an amount of more than 50 wt. %, based on total weigh of the emulsion, and the solvent phase comprises fatty acid ester and is present in the form of droplets which are at least partly distributed in the water phase;
(c) separating at least part of recyclable plastic material as obtained in step (b) from the liquid mixture as obtained in step (b) which contains contaminants removed from the contaminated recyclable plastic material;
(d) allowing at least part of the liquid mixture as obtained in step (c) to phase-separate into a water phase and a solvent phase which contains contaminants removed from the contaminated recyclable plastic material; and
(e) recycling at least part of the water phase as obtained in step (d) to step (b).

In another particular embodiment, the present invention relates to a process to a process for cleaning recyclable plastic material comprising the following steps:

(a) providing a contaminated recyclable non-styrene based plastic material which is derived from consumer product containers;
(b) contacting the contaminated recyclable plastic material at a temperature in the range of from 5-35 °C with a liquid mixture which comprises a water phase and a solvent phase to remove contaminants from the contaminated recyclable plastic material, wherein the contaminants are in liquid form, and wherein the water phase is present in an amount of more than 50 wt. %, based on total weigh of the emulsion, and the solvent phase comprises fatty acid ester and is present in the form of droplets which are at least partly distributed in the water phase;
(c) separating at least part of recyclable plastic material as obtained in step (b) from the liquid mixture as obtained in step (b) which contains contaminants removed from the contaminated recyclable plastic material;
(d) allowing at least part of the liquid mixture as obtained in step (c) to phase-separate into a water phase and a solvent phase which contains contaminants removed from the contaminated recyclable plastic material; and
(e) recycling at least part of the water phase as obtained in step (d) to step (b).

The present invention also relates to the use of an emulsion which comprises a water phase and a solvent phase to remove contaminants from a contaminated recyclable plastic material which derived from consumer product containers, wherein the water phase is present in an amount of more than 50 wt. %, based on total weigh of the emulsion, and the solvent phase comprises an acetate.

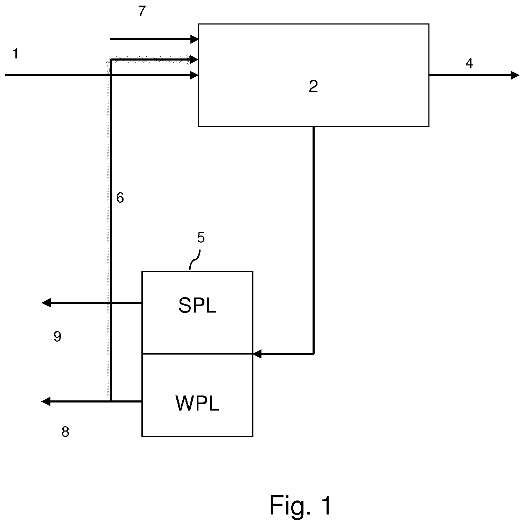

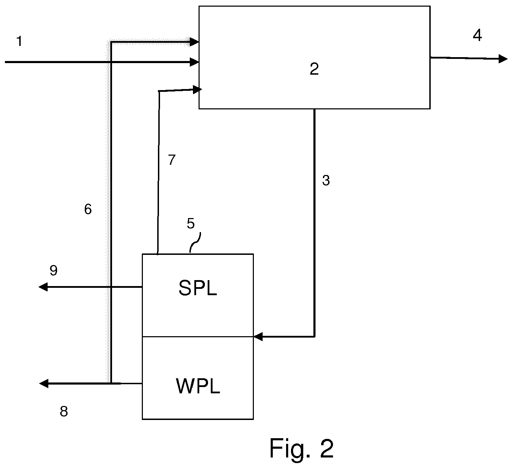

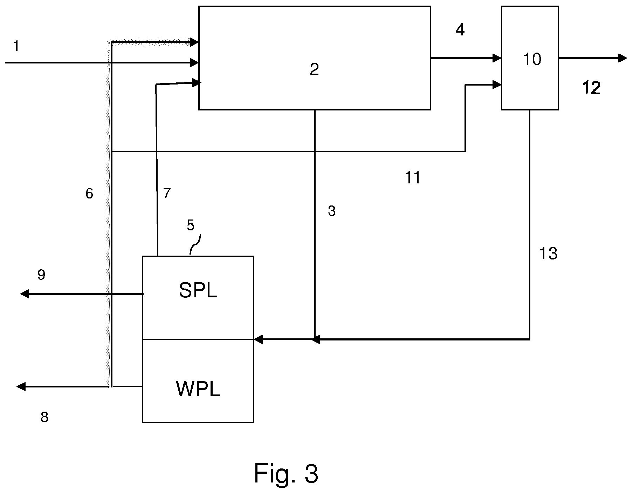

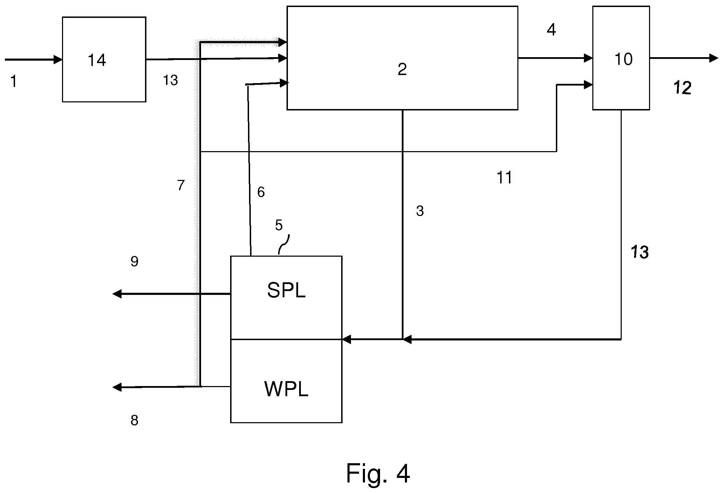

Figure 1 depicts the process according to the present invention; Figure 2 depicts a preferred embodiment of the present invention; Figure 3 depicts a further preferred embodiment of the process according to the present invention; Figure 4 depicts an even further preferred embodiment of the present invention.

In Figure 1, a stream of plastic flakes derived from consumer product containers which contain contaminants such as motor oil, milk or frying oil is passed to a cleaning vessel 2 which is operated at ambient temperature and atmospheric pressure. In cleaning vessel 2 a liquid mixture is introduced into vessel 2 by means of line 7. The liquid mixture comprises a water phase and a separate solvent phase. The solvent phase comprises a fatty acid ester, preferably a biodiesel, and is in the form of droplets which are at least partly distributed in the water phase. In cleaning vessel 2 the stream of plastic flakes is contacted under stirring with the liquid mixture to remove contaminants from the plastic flakes during which form a slurry of the plastic flakes and the liquid mixture. After a predetermined period of time the plastic flakes are separated from the liquid mixture for instance by separating means which are not shown in Figure 1, and the plastic flakes from which contaminants have been removed are withdrawn from vessel 2 via a line 4. The liquid mixture which contains contaminants removed from the plastic flakes and which is separated from the plastic flakes is withdrawn from vessel 2 via a line 3 and is then introduced in separation vessel 5. In separation vessel 5 the liquid mixture which behaves like an unstable emulsion is allowed to phase-separate into a water phase liquid (WPL) and a solvent phase liquid (SPL). At least part of the water phase liquid is recycled to cleaning vessel 2 via a line 6 and the remaining part of the water phase liquid is withdrawn from vessel 5 via a line 8, whereas the solvent phase liquid is withdrawn from separation vessel 5 via a line 9.

Figure 2 is an extension of Figure 1 in that now the liquid mixture is not directly introduced into cleaning vessel 2 by means of line 7 but that the liquid mixture is formed by mixing in the cleaning vessel 2 the water phase liquid and the solvent phase liquid which are respectively recycled from the separation vessel 5 via lines 6 and 7.

Figure 3 is an extension of Figure 2 in that in the plastic flakes withdrawn from the cleaning vessel 2 are via line 4 passed to a further cleaning vessel 10. In cleaning vessel 10 the plastic flakes are first rinsed with part of the water phase liquid as obtained in separation vessel and passed to cleaning vessel 10 by way of line 11. The plastic flakes are then subjected to a drying step and withdrawn from cleaning vessel 10 via a line 12. The water phase liquid with which the rinsing is carried out in cleaning vessel 8 is subsequently passed to separation vessel 5 via a line 13.

Figure 4 is an extension of Figure 3 in that the contaminated plastic flakes are first subjected to a pre-cleaning step in vessel 14.

## EXAMPLES

Example 1

Polypropylene (PP) sheets (thickness 500 micron) were cut into 10 mm x 10 mm flakes. 7 grams PP flakes were placed in a 70 mL glass jar. 1 g of fresh frying oil (AH Frituurolie from Albert Heijn supermarket) was added and thoroughly mixed to make sure the entire plastic surface was covered with a layer of fat. In a separate jar, 37.5 g water and 12.5 g methyl nonanoate (supplied by Sigma Aldrich) were mixed. The combined liquids were added to the greasy plastics and shaken gently for 1 minute.

After shaking, the liquids were filtered off and the PP flakes were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency. The equations below were used to calculate these quantities.

$$Remaining\ amount\ of\ oil = \frac{Mass\ remaining\ oil}{Mass\ PP}\ x100\%$$

$$= \frac{Mass\ after\ wash - Mass\ PP}{Mass\ PP}\ x100\%$$

$$Cleaning\ efficiency = \frac{Mass\ remaining\ oil}{Mass\ added\ oil} x100\%$$

$$= \frac{Mass\ after\ washing - Mass\ PP}{Mass\ added\ oil}\ x100\%$$

The remaining amount of oil after washing with this mixture was 0.5%. The cleaning efficiency i.e. the relative amount of oil that was removed in this washing step, was 96%.

Example 2

PP sheets (thickness 500 micron) were cut into 10 mm x 10 mm flakes. 7 grams PP flakes were placed in a 70 mL glass jar. 1 g of fresh frying oil (AH Frituurolie from Albert Heijn supermarket) was added and thoroughly mixed to make sure the entire plastic surface was covered with a layer of fat. In a separate jar, 37.5 g water and 12.5 g ethyl dodecanoate (supplied by Sigma Aldrich) were mixed. The combined liquids were added to the greasy plastics and shaken gently for 1 minute. After shaking, the liquids were filtered off and the PP flakes were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency. The equations as indicated in Example 1 were used to calculate these quantities.
The remaining amount of oil after washing with this mixture was 1.0%. The cleaning efficiency i.e. the relative amount of oil that was removed in this washing step, was 93%.

Example 3

PP sheets (thickness 500 micron) were cut into 10 mm x 10 mm flakes. 7 grams PP flakes were placed in a 70 mL glass jar. 1 g of fresh frying oil (AH Frituurolie from Albert Heijn supermarket) was added and thoroughly mixed to make sure the entire plastic surface was covered with a layer of fat. In a separate jar, 3.5 g water and 12.5 g methyl linoleate (supplied by Sigma Aldrich) were mixed. The combined liquids were added to the greasy plastics and shaken gently for 1 minute. After shaking, the liquids were filtered off and the PP flakes were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency. The equations as indicated in Example 1 were used to calculate these quantities.
The remaining amount of oil after washing with this mixture was 0.3%. The cleaning efficiency i.e. the relative amount of oil that was removed in this washing step, was 98%.

Example 4

PP sheets (thickness 500 micron) were cut into 10 mm x 10 mm flakes. 7 grams PP flakes were placed in a 70 mL glass jar. 1 g of fresh frying oil (AH Frituurolie from Albert Heijn supermarket) was added and thoroughly mixed to make sure the entire plastic surface was covered with a layer of fat. In a separate jar, 37.5 g water and 12.5 g Agripure AP-406 (methyl soyate, supplied by Cargill) were mixed. The combined liquids were added to the greasy plastics and shaken gently for 1 minute. After shaking, the liquids were filtered off and the PP flakes were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency. The equations as indicated in Example 1 were used to calculate these quantities.
The remaining amount of oil after washing with this mixture was 0.6%. The cleaning efficiency i.e. the relative amount of oil that was removed in this washing step, was 96%.

Example 5

PP sheets (thickness 500 micron) were cut into 10 mm x 10 mm flakes. 7 grams PP flakes were placed in a 70 mL glass jar. 1 g of fresh frying oil (AH Frituurolie from Albert Heijn supermarket) was added and thoroughly mixed to make sure the entire plastic surface was covered with a layer of fat. In a separate jar, 45 g water and 5 g Agripure AP-406 (methyl soyate, supplied by Cargill) were mixed. The combined liquids were added to the greasy plastics and shaken gently for 1 minute. After shaking, the liquids were filtered off and the PP flakes were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency according to the equations indicated in Example 1.

The remaining amount of oil after washing with this mixture was 2.4%. The cleaning efficiency i.e. the relative amount of oil that was removed in this washing step, was 83%.

Example 6

PP sheets (thickness 500 micron) were cut into 10 mm x 10 mm flakes. 7 grams PP flakes were placed in a 70 mL glass jar. 1 g of fresh frying oil (AH Frituurolie from Albert Heijn supermarket) was added and thoroughly mixed to make sure the entire plastic surface was covered with a layer of fat. In a separate jar, 45 g water and 5 g Agnique ME 18 RD-F (rape seed methyl ester, supplied by BASF) were mixed. The combined liquids were added to the greasy plastics and shaken gently for 1 minute. After shaking, the liquids were filtered off and the PP flakes were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency according to the equations in Example 1.

The remaining amount of oil after washing with this mixture was 0.8%. The cleaning efficiency i.e. the relative amount of oil that was removed in this washing step, was 94%.

Example 7

PP sheets (thickness 500 micron) were cut into 10 mm x 10 mm flakes. 7 grams PP flakes were placed in a 70 mL glass jar. 1 g of fresh frying oil (AH Frituurolie from Albert Heijn supermarket) was added and thoroughly mixed to make sure the entire plastic surface was covered with a layer of fat. In a separate jar, 37.5 g water and 12,5 g Agnique ME 18 RD-F (rape seed methyl ester, supplied by BASF) were mixed. The combined liquids were added to the greasy plastics and shaken gently for 1 minute. After shaking, the liquids were filtered off and the PP flakes were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency according to the equations in Example 1.

The remaining amount of oil after washing with this mixture was 2.2%. The cleaning efficiency i.e. the relative amount of oil that was removed in this washing step, was 85%.

Example 8

PP sheets (thickness 500 micron) were cut into 10 mm x 10 mm flakes. 10 grams PP flakes were placed in a 70 mL glass jar. High viscosity used frying oil was used for these tests, that contains at least 30% of saturated fat, which is solid at room temperature. Used frying oil was obtained from a fat waste collector in the Netherlands. 1 g of used frying oil was added and thoroughly mixed to make sure the entire plastic surface was covered with a layer of fat. In a separate jar, 37.5 g water and 12.5 g methyl nonanoate (supplied by Sigma Aldrich) were mixed. The combined liquids were added to the greasy plastics and shaken gently for 1 minute. After shaking, the liquids were filtered off and the PP flakes were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency. The equations as indicated in Example 1 were used to calculate these quantities.

The remaining amount of oil after washing with this mixture was 0.0%. The cleaning efficiency i.e. the relative amount of oil that was removed in this washing step, was 100%.

Example 9

PP sheets (thickness 500 micron) were cut into 10 mm x 10 mm flakes. 10 grams PP flakes were placed in a 70 mL glass jar. 1 g of used frying oil was added and thoroughly mixed to make sure the entire plastic surface was covered with a layer of fat. In a separate jar, 37.5 g water and 12.5 g ethyl dodecanoate (supplied by Sigma Aldrich) were mixed. The combined liquids were added to the greasy plastics and shaken gently for 1 minute.

After shaking, the liquids were filtered off and the PP flakes were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency. The equations as indicated in Example 1 were used to calculate these quantities.

The remaining amount of oil after washing with this mixture was 1.5%. The cleaning efficiency i.e. the relative amount of oil that was removed in this washing step, was 85%.

Example 10

PP sheets (thickness 500 micron) were cut into 10 mm x 10 mm flakes. 10 grams PP flakes were placed in a 70 mL glass jar. 1 g of used frying oil was added and thoroughly mixed to make sure the entire plastic surface was covered with a layer of fat. In a separate jar, 37.5 g water and 12.5 g methyl linoleate (supplied by Sigma Aldrich) were mixed. The combined liquids were added to the greasy plastics and shaken gently for 1 minute. After shaking, the liquids were filtered off and the PP flakes were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency. The equations as indicated in Example 1 were used to calculate these quantities.

The remaining amount of oil after washing with this mixture was 2.2%. The cleaning efficiency i.e. the relative amount of oil that was removed in this washing step, was 79%.

Example 11

PP sheets (thickness 500 micron) were cut into 10 mm x 10 mm flakes. 10 grams PP flakes were placed in a 70 mL glass jar. 1 g of used frying oil was added and thoroughly mixed to make sure the entire plastic surface was covered with a layer of fat. In a separate jar, 37.5 g water and 12.5 g Agripure AP-406 (methyl soyate, supplied by Cargill) were mixed. The combined liquids were added to the greasy plastics and shaken gently for 1 minute.
After shaking, the liquids were filtered off and the PP flakes were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency. The equations as indicated in Example 1 were used to calculate these quantities.

The remaining amount of oil after washing with this mixture was 2.1%. The cleaning efficiency i.e. the relative amount of oil that was removed in this washing step, was 78%.

Example 12

PP sheets (thickness 500 micron) were cut into 10 mm x 10 mm flakes. 10 grams PP flakes were placed in a 70 mL glass jar. 1 g of used frying oil was added and thoroughly mixed to make sure the entire plastic surface was covered with a layer of fat. In a separate jar, 45 g water and 5 g Agripure AP-406 (methyl soyate, supplied by Cargill) were mixed. The combined liquids were added to the greasy plastics and shaken gently for 1 minute.
After shaking, the liquids were filtered off and the PP flakes were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency according to the equations in Example 1.

The remaining amount of oil after washing with this mixture was 3,1%. The cleaning efficiency i.e. the relative amount of oil that was removed in this washing step, was 70%.

Example 13

PP sheets (thickness 500 micron) were cut into 10 mm x 10 mm flakes. 10 grams PP flakes were placed in a 70 mL glass jar. 1 g of used frying oil was added and thoroughly mixed to make sure the entire plastic surface was covered with a layer of fat. In a separate jar, 37.5 g water and 12.5 g Agnique ME 18 RD-F (rape seed methyl ester, supplied by BASF) were mixed. The combined liquids were added to the greasy plastics and shaken gently for 1 minute.
After shaking, the liquids were filtered off and the PP flakes were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency according to the equations in Example 1.

The remaining amount of oil after washing with this mixture was 2.3%. The cleaning efficiency i.e. the relative amount of oil that was removed in this washing step, was 77%.

Example 14 (Comparative Example)

PP sheets (thickness 500 micron) were cut into 10 mm x 10 mm flakes. 7 grams PP flakes were placed in a 70 mL glass jar. 1 g of fresh frying oil (AH Frituurolie) was added and thoroughly mixed to make sure the entire plastic surface was covered with a layer of fat. In a separate jar, 50 g water was collected. The water was added to the greasy plastics and shaken gently for 1 minute. After shaking, the liquids were filtered off and the PP flakes were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency. The equations as indicated in Example 1 were used to calculate these quantities.
The remaining amount of oil after washing with water was 6.0%. The cleaning efficiency i.e. the relative amount of oil that was removed in this washing step, was 57%.

Example 15 (Comparative Example)

PP sheets (thickness 500 micron) were cut into 10 mm x 10 mm flakes. 10 grams PP flakes were placed in a 70 mL glass jar. 1 g of used frying oil was added and thoroughly mixed to make sure the entire plastic surface was covered with a layer of fat. In a separate jar, 50 g water was collected. The water was added to the greasy plastics and shaken gently for 1 minute. After shaking, the liquids were filtered off and the PP flakes were rinsed thoroughly with water. The wet PP flakes were dried in an oven for 24 hours at 130 °C. After drying, the mass of the flakes was determined. The mass before washing (PP and fat) and the total mass after cleaning were used to calculate the remaining amount of oil on the plastic surface and the cleaning efficiency. The equations as indicated in Example 1 were used to calculate these quantities.
The remaining amount of oil after washing with water was 8.8%. The cleaning efficiency i.e. the relative amount of oil that was removed in this washing step, was 14%.
From the above Examples and Table 1 shown hereinbelow it will be clear that in accordance with the present invention a most attractive removal from oily contaminants is established from oil-contaminated plastic materials.

Table 1

| Example No. | Cleaning agent | Percentage cleaner in water | Type of oil | Total wt% fat at start (wt%) | Residual wt% fat (wt%) | Cleaning efficiency (wt%) |
|---|---|---|---|---|---|---|
| 1 | Methyl nonanoate | 25 | Fresh | 14 | 0.5 | 96 |
| 2 | Ethyl dodecanoate | 25 | Fresh | 14 | 1.0 | 93 |
| 3 | Methyl linoleate | 25 | Fresh | 14 | 0.3 | 98 |
| 4 | Methyl soyate | 25 | Fresh | 14 | 0.6 | 96 |
| 5 | Methyl soyate | 10 | Fresh | 15 | 2.4 | 83 |
| 6 | Agnique | 10 | Fresh | 15 | 0.8 | 94 |
| 7 | Agnique | 25 | Fresh | 15 | 2.2 | 85 |
| 8 | Methyl nonanoate | 25 | Used | 10 | 0.0 | 100 |
| 9 | Ethyl dodecanoate | 26 | Used | 10 | 1.5 | 85 |
| 10 | Methyl linoleate | 25 | Used | 10 | 2.2 | 79 |
| 11 | Agripure | 25 | Used | 10 | 2.1 | 78 |
| 12 | Agripure | 11 | Used | 10 | 3.1 | 70 |
| 13 | Agnique | 25 | used | 10 | 2.3 | 77 |

(continued)

| Example No. | Cleaning agent | Percentage cleaner in water | Type of oil | Total wt% fat at start (wt%) | Residual wt% fat (wt%) | Cleaning efficiency (wt%) |
|---|---|---|---|---|---|---|
| 14 | Water | 0 | Fresh | 14 | 6.0 | 57 |
| 15 | Water | 0 | Used | 10 | 8.8 | 14 |

**Claims**

1. A process for cleaning recyclable plastic material comprising the following steps:

   (a) providing a contaminated recyclable non-styrene based plastic material;
   (b) contacting the contaminated recyclable plastic material at a temperature in the range of from 5-35 °C with a liquid mixture which comprises a water phase and a separate solvent phase to remove contaminants from the contaminated recyclable plastic material, whereby the solvent phase comprises a fatty acid ester and is present in the form of droplets which are at least partly distributed in the water phase, wherein the fatty acid ester in the solvent phase has the general formula (I) of $R^1$-(C=O)-$R^2$ wherein $R^1$ is an alkyl group comprising between 8-24 carbon atoms, and $R^2$ is an alkyl-alcohol group comprising between 1-4 carbon atoms, and wherein the water phase is present in an amount of more than 50 wt. %, based on total weight of the liquid mixture;
   (c) separating at least part of recyclable plastic material as obtained in step (b) from the liquid mixture as obtained in step (b) which contains contaminants removed from the contaminated recyclable plastic material;
   (d) allowing at least part of the liquid mixture as obtained in step (c) to phase-separate into a water phase and a solvent phase which contains contaminants removed from the contaminated recyclable plastic material; and
   (e) recycling at least part of the water phase as obtained in step (d) to step (b).

2. The process according to claim 1, wherein the recyclable non-styrene plastic material as provided in step (a) is selected from the group consisting of a recyclable high density polyethylene material, low density polyethylene material, polyethylene terephthalate material, polypropylene material, polyvinylchloride material, polyamide material, polybutylene terephthalate material, polycarbonate material, polymethylmethacrylate material, and polyoxymethylene material,

3. The process according to claim 2, wherein the recyclable non-styrene based plastic material is a recyclable high density polyethylene material or polyethylene terephthalate material.

4. The process according to any one of claims 1-3, wherein the temperature in step (b) is in the range of from 15-30 °C.

5. The process according to claim 4, wherein step (b) is carried out at a pH in the range of from 6-8.

6. The process according to any one of claims 1-5, wherein the solvent phase in step (b) is present in an amount in the range of from 1-20 wt. %, based on total weight of the liquid mixture.

7. The process according to any one of claims 1-6, wherein the fatty acid ester is a biodiesel.

8. The process according to any one of claims 1-7 wherein the entire liquid mixture as obtained in step (c) is subjected to step (d).

9. The process according to any one of claims 1-8, wherein the contaminants are in liquid form.

10. The process according to any one of claims 1-9, wherein the contaminants to be removed from the recyclable plastic material include food or beverage products, oil products, lubricant products or cosmetic products.

11. The process according to any one of claims 1-10, wherein the contaminated recyclable material as provided in step (a) has been subjected to a pre-cleaning treatment.

12. The process according to any one of claims 1-11, wherein at least part of the recyclable plastic material is as obtained in step (c) is subsequently subjected to a drying step.

13. The process according to any one of claims 1-12, wherein at least part of the solvent phase as obtained in step (d) is recycled to step (b).

**Patentansprüche**

1. Vorgang zum Reinigen von recycelbarem Kunststoffmaterial, das die folgenden Schritte umfasst:

   (a) Bereitstellen eines verunreinigten recycelbaren Kunststoffmaterials, das nicht auf Styrol basiert;
   (b) Inberührungbringen des verunreinigten recycelbaren Kunststoffmaterials mit einer flüssigen Mischung bei einer Temperatur in dem Bereich von 5-35 °C, das eine Wasserphase und eine getrennte Lösungsmittelphase umfasst, um Verunreinigungen aus dem verunreinigten recycelbaren Kunststoffmaterial zu entfernen, wodurch die Lösungsmittelphase einen Fettsäureester umfasst und in der Form von Tröpfchen vorliegt, die wenigstens teilweise in der Wasserphase verteilt sind, wobei der Fettsäureester in der Lösungsmittelphase die allgemeine Formel (I) von $R^1$-(C=O)-$R^2$ aufweist, wobei $R^1$ eine Alkylgruppe ist, die zwischen 8-24 Kohlenstoffatome umfasst, und $R^2$ eine Alkylalkoholgruppe ist, die zwischen 1-4 Kohlenstoffatome umfasst, und wobei die Wasserphase in einer Menge von mehr als 50 Gew.-% vorliegt, die auf dem Gesamtgewicht der flüssigen Mischung basiert;
   (c) Trennen von wenigstens einem Teil des wie in Schritt (b) erhaltenen recycelbaren Kunststoffmaterials von der wie in Schritt (b) erhaltenen flüssigen Mischung, die Verunreinigungen enthält, die aus dem verunreinigten recycelbaren Kunststoffmaterial entfernt werden;
   (d) Ermöglichen von wenigstens einem Teil der wie in Schritt (c) erhaltenen flüssigen Mischung in eine Wasserphase und eine Lösungsmittelphase phasenzutrennen, die Verunreinigungen enthält, die aus dem verunreinigten recycelbaren Kunststoffmaterial entfernt werden; und
   (e) Recyceln von wenigstens einem Teil der wie in Schritt (d) erhaltenen Wasserphase zu Schritt (b).

2. Vorgang nach Anspruch 1, wobei das in Schritt (a) bereitgestellte recycelbare Kunststoffmaterial, das nicht Styrol ist, aus der Gruppe ausgewählt ist, die aus einem recycelbaren Polyethylenmaterial hoher Dichte, Polyethylenmaterial niedriger Dichte, Polyethylenterephthalatmaterial, Polypropylenmaterial, Polyvinylchloridmaterial, Polyamidmaterial, Polybutylenterephthalatmaterial, Polycarbonatmaterial, Polymethylmethacrylatmaterial und Polyoxymethylenmaterial besteht,

3. Vorgang nach Anspruch 2, wobei das recycelbare Kunststoffmaterial, das nicht auf Styrol basiert, ein recycelbares Polyethylenmaterial hoher Dichte oder ein Polyethylenterephthalatmaterial ist.

4. Vorgang nach einem der Ansprüche 1-3, wobei die Temperatur in Schritt (b) in dem Bereich von 15-30 °C liegt.

5. Vorgang nach Anspruch 4, wobei Schritt (b) bei einem pH-Wert in dem Bereich von 6-8 durchgeführt wird.

6. Vorgang nach einem der Ansprüche 1-5, wobei die Lösungsmittelphase in Schritt (b) in einer Menge in dem Bereich von 1-20 Gew.-% vorliegt, die auf dem Gesamtgewicht der flüssigen Mischung basiert.

7. Vorgang nach einem der Ansprüche 1-6, wobei der Fettsäureester ein Biodiesel ist.

8. Vorgang nach einem der Ansprüche 1-7, wobei die gesamte wie in Schritt (c) erhaltene flüssige Mischung Schritt (d) unterzogen wird.

9. Vorgang nach einem der Ansprüche 1-8, wobei die Verunreinigungen flüssiger Form sind.

10. Vorgang nach einem der Ansprüche 1-9, wobei die Verunreinigungen, die aus dem recycelbaren Kunststoffmaterial zu entfernen sind, Nahrungsmittel- oder Getränkeprodukte, Erdölprodukte, Schmiermittelprodukte und/oder Kosmetikprodukte beinhalten.

11. Vorgang nach einem der Ansprüche 1-10, wobei das wie in Schritt (a) bereitgestellte verunreinigte recycelbare Material einer Vorreinigungsbehandlung unterzogen wurde.

**12.** Vorgang nach einem der Ansprüche 1-11, wobei wenigstens ein Teil des wie in Schritt (c) erhaltenen recycelbaren Kunststoffmaterials anschließend einem Trocknungsschritt unterzogen wird.

**13.** Vorgang nach einem der Ansprüche 1-12, wobei wenigstens ein Teil der wie in Schritt (d) erhaltenen Lösungsmittelphase zu Schritt (b) recycelt wird.


## Revendications

**1.** Procédé de nettoyage de matériau plastique recyclable comprenant les étapes suivantes :

(a) la fourniture d'un matériau plastique non-styrène recyclable contaminé ;
(b) la mise en contact du matériau plastique recyclable contaminé à une température dans la plage de 5 à 35 °C avec un mélange liquide qui comprend une phase aqueuse et une phase solvant séparée pour éliminer des contaminants du matériau plastique recyclable contaminé, la phase solvant comprenant un ester acide gras et étant présente sous forme de gouttelettes qui sont au moins partiellement réparties dans la phase aqueuse, l'ester acide gras dans la phase solvant ayant la formule générale (I) de $R^1$-(C=O)-$R^2$, $R^1$ étant un groupe alkyle comprenant entre 8 à 24 atomes de carbone, et $R^2$ étant un groupe alkyl-alcool comprenant entre 1 à 4 atomes de carbone, et la phase aqueuse étant présente en une quantité de plus de 50 % en poids, en fonction du poids total du mélange liquide ;
(c) la séparation d'au moins une partie du matériau plastique recyclable obtenu à l'étape (b) du mélange liquide tel qu'obtenu à l'étape (b) qui contient des contaminants éliminés du matériau plastique recyclable contaminé ;
(d) la permission à au moins une partie du mélange liquide tel qu'obtenu à l'étape (c) de se séparer en phase en une phase aqueuse et une phase solvant qui contient des contaminants éliminés du matériau plastique recyclable contaminé ; et
(e) le recyclage d'au moins une partie de la phase aqueuse telle qu'obtenue de l'étape (d) à étape (b).

**2.** Procédé selon la revendication 1, dans lequel le matériau plastique non-styrène recyclable tel que fourni à l'étape (a) est choisi dans le groupe constitué par un matériau polyéthylène à haute densité recyclable, un matériau polyéthylène à basse densité, un matériau polyéthylène téréphtalate, un matériau polypropylène, un matériau chlorure de polyvinyle, un matériau polyamide, un matériau polybutylène téréphtalate, un matériau polycarbonate, un matériau polyméthacrylate de méthyle et un matériau polyoxyméthylène,

**3.** Procédé selon la revendication 2, dans lequel le matériau plastique non-styrène recyclable est un matériau recyclable en polyéthylène haute densité ou en polyéthylène téréphtalate.

**4.** Procédé selon l'une quelconque des revendications 1 à 3, dans lequel la température à l'étape (b) est dans la plage de 15 à 30 °C.

**5.** Procédé selon la revendication 4, dans lequel l'étape (b) est effectuée à un pH dans la plage de 6 à 8.

**6.** Procédé selon l'une quelconque des revendications 1 à 5, dans lequel la phase solvant à l'étape (b) est présente en une quantité dans la plage de 1 à 20 % en poids, en fonction du poids total du mélange liquide.

**7.** Procédé selon l'une quelconque des revendications 1 à 6, dans lequel l'ester acide gras est un biodiesel.

**8.** Procédé selon l'une quelconque des revendications 1 à 7, dans lequel le mélange liquide entier tel qu'obtenu à l'étape (c) est soumis à l'étape (d).

**9.** Procédé selon l'une quelconque des revendications 1 à 8, dans lequel les contaminants sont sous forme liquide.

**10.** Procédé selon l'une quelconque des revendications 1 à 9, dans lequel les contaminants à éliminer du matériau plastique recyclable comprennent des produits alimentaires ou des boissons, des produits pétroliers, des produits lubrifiants ou des produits cosmétiques.

**11.** Procédé selon l'une quelconque des revendications 1 à 10, dans lequel le matériau recyclable contaminé tel que fourni à l'étape (a) a été soumis à un traitement de pré-nettoyage.

12. Procédé selon l'une quelconque des revendications 1 à 11, dans lequel au moins une partie du matériau plastique recyclable est telle qu'obtenue à l'étape (c) et est ensuite soumise à une étape de séchage.

13. Procédé selon l'une quelconque des revendications 1 à 12, dans lequel au moins une partie de la phase solvant telle qu'obtenue à l'étape (d) est recyclée à l'étape (b).

Fig. 1

Fig. 2

Fig. 3

Fig. 4

**REFERENCES CITED IN THE DESCRIPTION**

**Patent documents cited in the description**

- WO 2011019397 A1
- JP 3156935 B
- US 2016053205 A1